Europäisches Patentamt

European Patent Office

Office européen des brevets

Publication number: **0 275 382**
**A1**

## EUROPEAN PATENT APPLICATION

Application number: 87116336.6

Date of filing: 05.11.87

Int. Cl.⁴ **D21F 11/00 , D21H 5/00 , C08J 5/04**

Priority: **22.12.86 US 944311**

Date of publication of application:
**27.07.88 Bulletin 88/30**

Designated Contracting States:
**DE FR GB IT NL**

Applicant: **GENERAL ELECTRIC COMPANY**
**1 River Road**
**Schenectady New York 12305(US)**

Inventor: **Brun, Milivoj Konstantin**
**RD3, Jockey Street**
**Ballston Lake New York 12019(US)**
Inventor: **Morrison, William Arthur**
**3 Holland Avenue**
**Albany New York 12205(US)**
Inventor: **Besio, Gregory John**
**42 E. Friars Gate Twin Lakes Apts.**
**Clifton Park New York 12065(US)**
Inventor: **McAlea, Kevin Patrick**
**513 Foxwood Drive**
**Clifton Park New York 12301(US)**
Inventor: **Matsumoto, Dean Saburo**
**127 N. College Street**
**Schenectady New York 12305(US)**
Inventor: **Vallance, Michael Alan**
**511 Union Street**
**Schenectady New York 12305(US)**

Representative: **Catherine, Alain et al**
**General Electric France Service de Propriété**
**Industrielle 18 Rue Horace Vernet B.P. 76**
**F-92134 Issy-les-Moulineaux Cedex(FR)**

Method for preparing composite felt preforms.

Composite felt preforms are prepared by dispersing a plurality of chopped fibers as a slurry in a viscous liquid such as glycerol under conditions of substantially uniform laminar flow, removing said liquid to produce a fiber mat and contacting said mat with a particulate matrix material. Illustrative matrix materials are ceramics, metals, thermoplastic resins and thermosetting resins. Depending on its particle size and other properties, the matrix material may be subsequently deposited on the already formed mat or may be codispersed with the fibers to form a mixed slurry which forms the mat.

# METHOD FOR PREPARING COMPOSITE FELT PREFORMS

This invention relates to the preparation of fiber-reinforced composites, and more particularly to the preparation of felt preforms suitable for conversion to such composites.

Composite articles comprising chopped fibers embedded in a matrix material are of considerable interest because of their advantageous properties including stiffness and high strength. Depending on the matrix, they may have such properties as dielectric strength, conductivity and barrier properties. Such matrices as thermoplastic and thermosetting resins, ceramics and metals are illustrative.

In the manufacture of such composites, uniform distribution of the fibers in the matrix is important. If their distribution is non-uniform, the properties of the composite will also be non-uniform. Thus, there may be fiber-depleted regions in the article which decrease its strength, or fiber clumps may form near the surface causing an undesirably irregular appearance.

A more serious problem is sometimes encountered with ceramic composites subjected to high temperatures. If the fibers are oxidizable and are not completely encapsulated by the matrix, contact between fibers can promote oxidation by a percolation mechanism which causes oxidative destruction to progress along the length of the fibers.

The most desirable fiber orientation in these composites is substantially random in the plane, although a minor component perpendicular to the plane may be advantageous to inhibit delamination. The reinforcement should have a high effective aspect ratio - that is, a high ratio of length to diameter - which requires dispersal of fiber tows or bundles into individual fibers.

Attainment of these objects has hitherto been difficult, if not impossible. In large part, such operations as weaving of fiber tows, quasi-isotropic lamination of fiber tapes, turbulent air dispersal of tow fibers, needling of reinforcing fibers into a resinous fiber mat or utilization of matrix-impregnated fiber felts have been employed to approximate random fiber orientation. These operations have numerous disadvantages, including uneven distribution of fibers, labor intensiveness, limited fiber loading, damage to the fibers and poor surface appearance.

Another problem with these methods is their substantial incapability of dealing with matrix materials in their most readily available form: as powders or granules. Instead, they must be furnished as unsupported films (as described, for example, in U.S. Patent 4,469,543), and this requires specialized equipment and is possible with only a limited class of matrices.

Various paper making techniques, employing water as a dispersing medium, have also been employed. For example, U.S. Patent 4,426,470 discloses a method whereby fibers and matrix material are dispersed in an aqueous medium which contains a positively or negatively charged latex and a flocculant is added to agglomerate the latex, facilitating felt deposition. This method has numerous disadvantages. For example, the viscosity of water is so low (about 1 centipoise) that areas of turbulence therein cause fiber matting, the latex material remains in and may degrade the composite, and the use of hydrophilic flocculants and the like may make water removal difficult.

The present invention provides a relatively simple method for preparing uniformly reinforced fibrous composites with negligible fiber damage. It minimizes the presence of foreign materials, employs readily available particulate matrix materials and permits the use of relatively high fiber aspect ratios and loadings. Batchwise and continuous operation are both feasible, and fiber orientation can vary from predominantly random in the plane to substantially unidirectional. Composite preforms may be obtained as felts or as consolidated sheets.

The present invention is a method for preparing a fibrous composite preform which comprises dispersing a plurality of fibers as a slurry in a viscous liquid under conditions of substantially uniform laminar flow, removing said liquid by filtration to produce a fiber mat and contacting said mat with a particulate matrix material, thereby forming a felt preform.

The invention is useful with virtually any fibrous reinforcing material and any matrix material known to be useful for composite formation. Illustrative fibers are glass, carbon, boron, polyamide, polyester and cellulose. The fibers are ordinarily chopped, typically into lengths of about 2-50 mm. Matrix materials include ceramics, metals thermoplastic resins such as polyamides, polyimides, polyethers, linear polyesters, polycarbonates, polyphenylene ethers, polyolefins, vinyl polymers, acrylic polymers, fluorocarbons and polysiloxanes, and thermosetting resins such as unsaturated polyesters and epoxy resins.

According to the invention, the fibrs are dispersed in a viscous liquid. The proportion of liquid with respect to fibers and matrix for optimum results will depend in large part on fiber length and may be determined by simple experimentation. In general, greatr proportions of liquid are advisable for longer fibers to minimize entanglement.

Various fibers available in tows and the like are coated with sizes or with coupling agents such as alkoxysilanes. Removal of such materials may be advisable for optimum dispersability of the fibers. They may be removed by conventional means such as heat treatment or dissolution.

It is essential that the viscosity of the viscous liquid be considerably higher then that of water, in order to inhibit turbulent flow. Liquids having a viscosity at 25°C of at least about 500 centipoises are particularly useful, and those having a viscosity of at least about 900 centipoises are preferred. It may be advantageous to employ liquids of higher viscosity with shorter fiber lengths.

In respects other then the viscosity property and substantial chemical inertness in the context of the invention, the identity of the viscous liquid is not critical. It may be polar or non-polar and may be a pure liquid or a solution of a suitable thickening agent. For the most part, polar liquids and especially water-miscible liquids are advantageous because they may be easily removed by rinsing with water. Hydroxy compounds are often preferred because of their capability of dissolving typical fiber coupling agents and forming hydrogen bonds with resins having polar substituents, facilitating dispersion.

From the standpoint of viscosity, glycerol is particularly useful; its viscosity at 25°C is 954 cp. Other suitable liquids include those having viscosities substantially equivalent to that of glycerol. Polar liquids having this property include aqueous solutions of thickening polymers such as polyacrylamide and polyethylene oxide. Among non-polar liquids, viscous petroleum fractions and polysiloxane oils may be particularly suitable.

It is within the scope of the invention to incorporate various additives in the viscous liquid. For example, when alkoxysilanes or similar coupling agents have been removed from the fibers, such materials may be added at this point for finishing purposes.

The fibers are suspended in the viscous liquid under conditions of substantially uniform laminar flow and typically at a temperature near ambient (e.g., about 20-30°C). An essential feature of the invention is the avoidance of turbulent areas. By maintaining uniform laminar flow, the fibers are dispersed uniformly and form a mat substantially free from fiber clumps and voids.

Various types of apparatus suitable for producing substantially uniform laminar flow are known and may be used or emulated for practicing the invention. For example, cone-plate rheometers are commonly used for analytical purposes and similarly designed equipment may be employed in batch processes. For continuous use, a counterrotating coaxial cylinder apparatus (of the type exemplified in various viscometers) is suitable, with the slurry passing between the two cylinders.

Following dispersal of the fibers, the viscous liquid is removed by filtration to produce a fiber mat. The word "filtration" is used herein in a generic sense and includes employment of conventional filters as well as screens, porous metal plates, porous belts or drums typical in paper manufacture and the like. Pore sizes therein will be chosen to prevent loss of matrix particles. The only critical aspect is the capability of substantially complete removal of the viscous liquid. In most instances, application of reduced pressure aids such removal.

Several options for matrix incorporation in the fiber mat are available. Ceramic and metal matrices of small average particle size (e.g.e less than about 1 micron) may be slurried in water or an equivalent liquid and deposited on the already formed mat, whereupon they percolate into the voids therein. The same order of operations is frequently useful with thermoplastic matrices of larger particle size and low melt viscosity, since subsequent fusion of the resin particles will cause permeation of the mat thereby. An alternative for use with essentially all resinous materials of large particle size is to codisperse them with the fibers in the viscous liquid to form a mixed slurry, which will form a substantially uniform mat on filtration.

Further water washing is generally advantageous after filtration, to ensure removal of residual liquors whose presence in the composite may be deleterious. Uniform distribution of wash water may be achieved by the use of suitably placed spray nozzles or the like. Contact of the felt with a liquid-permeable medium such as a sponge for uniform distribution of wash water is also within the scope of the invention.

Recycle of the viscous liquid is often possible, particularly when said liquid is glycerol and it is segregated from any rinse water to avoid dissolution resulting in viscosity decrease. If the viscous liquid is a polymer solution, recycle may not be practical and it may be necessary to discard the polymer. Many such polymers are environmentally harmless and may be discharged into waste water streams. Alternatively, coagulating agents, typically inorganic salts such as magnesium chloride, calcium chloride or calcium sulfate, may be introduced into the used polymer solution to coagulate the polymer for removal by filtration. Removal of coagulants from the fiber mat if necessary is simply achieved by rinsing.

The product of the method of this invention is a felt preform which may be subjected to typical operations for composite manufacture. Further drying, consolidation into shapes or sheet form, molding, compression and lamination are typical. In most instances, steps resulting in fusion or sintering of the matrix material will be necessary to complete composite formation. Such operations need not be described in detail since they are well known in the art.

The invention is illustrated by the following examples, performed on a laboratory scale to demonstrate the utility of the invention.

## Example 1

Ten grams of chopped glass fiber rovings 6.4 mm. in length was heat cleaned in circulating air at 500°C for 30 minutes, using a convection oven. The fibers were then added to 1000 ml. of glycerol and the slurry was dispersed in a cone-plate rheometer in which the cone diameter was 16.5 cm. and the cone surface made an angle of 60° with its center line. There was subsequently added to the slurry 15 grams of a commercially available bisphenol A polycarbonate powder. As operation of the rheometer continued, the resin powder and glass fibers were uniformly dispersed under conditions of substantially uniform laminar flow.

The slurry was filtered under vacuum through a polytetrafluoroethylene-coated glass fiber fabric filter, said filter being heated to 50°C to facilitate liquid removal. A second slurry of equal size and composition was deposited on the first. The resulting mat was press filtered by placing a plastic film over the lip of the filter funnel and applying suction.

The mat was rinsed with warm water over night and vacuum dried for 24 hours at 150°C. A rectangular swatch was cut therefrom and compression molded in a matched die positive pressure mold at 275°C and 4.2 MPa. There was produced a composite with a smooth, lustrous surface and relatively few undispersed fiber clumps.

## Example 2

The procedure of Example 1 was repeated, substituting for the polycarbonate resin a commercially available poly(2,6-dimethyl-p-phenylene ether). Molding was effected at 370°C. The resulting composite was somewhat less uniformly dispersed then that of Example 1.

## Example 3

A solution of 90 parts of the polyphenylene ether of Example 2, 10 parts of a condensation product of two moles of epichlorohydrin and 1 mole of bisphenol A and 2 parts of aluminum trisacetylacetonate in chloroform was stripped of solvent in a vacuum-assisted film evaporator and the resulting film was pulverized, vacuum dried and ground to a powder with a particle size less than 0.5 mm. Following the procedure of Example 1, a felt was produced therefrom and was molded at 280°C. The resulting plaque was of substantially uniform appearance.

## Example 4

The procedure of Example 1 was repeated, substituting for the polycarbonate a commercially available polyetherimide prepared by the reaction of m-phenylene-diamine with 2,2-bis[4-(3,4-dicarboxyphenoxy)phenyl]propane dianhydride. Upon molding at 350°C, there was obtained a plaque exhibiting fine fiber dispersion and surface smoothness.

## Example 5

A slurry of 5 grams of high-strength carbon fibers, 30 mm. in length, in 500 ml. of glycerol was dispersed for 1 minute under conditions similar to those in Example 1, and vacuum filtered through filter paper overlaid with a thick rubber layer containing a cut-out of the desired shape. The resulting fiber mat was rinsed with distilled water and an aqueous slurry of alumina particles having an average diameter of 0.3 micron was allowed to percolate through the mat. The resulting felt preform was dried over night at 100°C and molded in a graphite die at 1650°C and 35 MPa. The resulting ceramic composite showed well dispersed fibers in a densified matrix.

## Example 6

The procedure of Example 5 was repeated, substituting for the glycerol a solution of 5 grams of commercially available polyethylene oxide in 25 ml. of ethanol and 500 ml. of distilled water, said solution having a viscosity comparable to that of glycerol. The composite product was similar to that of Example 5.

## Example 7

A fiber-glycerol slurry similar to that of Example 5 was deposited on filter paper and filtered under vacuum. There was then added a well dispersed aqueous mullite slurry and filtration was resumed. The resulting preform was molded in the graphite die at 1505°C, producing a composite with well dispersed fibers in a dense mullite matrix.

## Claims

1. A method for preparing a fibrous composite preform which comprises dispersing a plurality of fibers as a slurry in a viscous liquid under conditions of substantially uniform laminar flow, removing said liquid by filtration to produce a fiber mat and contacting said mat with a particulate matrix material, thereby forming a felt preform.

2. A method according to claim 1 wherein the viscous liquid has a viscosity at 25°C of at least about 500 centipoises.

3. A method according to claim 2 wherein the fibers are glass, carbon, boron, polyamide, polyester or cellulose and the matrix material is a ceramic, metal, thermoplastic resin or thermosetting resin.

4. A method according to claim 3 wherein the fiber length is in the range of about 2-50 mm.

5. A method according to claim 4 wherein the matrix material is a ceramic having an average particle size less then about 1 micron.

6. A method according to claim 5 wherein the fiber mat is first formed and subsequently contacted with a slurry of the matrix material in a liquid.

7. A method according to claim 6 wherein the viscous liquid has a viscosity at 25°C of at least about 900 centipoises.

8. A method according to claim 7 wherein the viscous liquid is glycerol or a polar liquid having a viscosity substantially equivalent to that of glycerol.

9. A method according to claim 8 wherein the viscous liquid is glycerol.

10. A method according to claim 4 wherein the matrix material is a thermoplastic resin.

11. A method according to claim 10 wherein the resin and the fibers are codispersed in said viscous liquid.

12. A method according to claim 11 wherein the viscosity of the viscous liquid at 25°C is at least about 900 centipoises.

13. A method according to claim 12 wherein the viscous liquid is glycerol or a polar liquid having a viscosity substantially equivalent to that of glycerol.

14. A method according to claim 13 wherein the viscous liquid is glycerol.

15. A method according to claim 13 wherein the thermoplastic resin is a polycarbonate.

16. A method according to claim 13 wherein the thermoplastic resin is a polyetherimide.

17. A method according to claim 13 wherein the thermoplastic resin is a polyphenylene ether.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 128 321 (THE MINISTER OF TECHNOLOGY) * Claims 1-8 * | 1,3,4 | D 21 F 11/00 D 21 H 5/00 C 08 J 5/04 |
| X | GB-A-1 400 530 (NATIONAL RESEARCH DEVELOPMENT CORP.) * Figures 1-3; claims 1,8,9; page 2, lines 106-130; page 4, lines 6-77 * | 1-4,12-14 | |
| X | EP-A-0 071 219 (THE DOW CHEMICAL CO.) * Claims 1-5,9-11; page 5, last paragraph; page 6; examples 2,3,6,7 * & US-A-4 426 470 (Cat. D) | 1,3,4, 10,11, 15,17 | |
| X | EP-A-0 180 863 (THE DOW CHEMICAL CO.) * Claims 1-7,13; page 7, line 11 - page 8, line 7; examples II,III * | 1,3,4, 10,11, 15 | |
| X | EP-A-0 062 142 (MESSERSCHMITT-BÖLKOW-BLOHM) * Figures 1-3; claims 1-7; pages 4-7 * | 1-4,10-13 | |
| A | GB-A-2 168 361 (H.R. SMITH (TECHNICAL DEVELOPMENTS)) * Whole document * | 6,10,16 | TECHNICAL FIELDS SEARCHED (Int. Cl.4) C 08 J D 21 F D 21 H |
| A | EP-A-0 013 244 (UNION CARBIDE CORP.) | | |
| A | US-A-3 617 437 (G.E.G. BAGG et al.) | | |
| A | WO-A-8 504 887 (HUGHES AIRCRAFT CO.) | | |

The present search report has been drawn up for all claims

| Place of search | Date of completion of the search | Examiner |
|---|---|---|
| THE HAGUE | 31-03-1988 | NESTBY K. |